# FASCICULE DE BREVET EUROPEEN

(11) **EP 1 644 703 B1**
(45) Date de publication et mention de la délivrance du brevet: **11.08.2010**
(21) Numéro de dépôt: 04767487.4
(22) Date de dépôt: 28.06.2004
(51) Int. Cl.: G01C 19/56

(54) **RESONATEUR POUR GYROSCOPE VIBRANT**
RESONATOR FÜR EIN SCHWINGUNGSGYROSKOP
RESONATOR FOR A VIBRATING GYROSCOPE

(30) Priorité: 10.07.2003 FR 0308465
(43) Date de publication de la demande: 12.04.2006
(73) Titulaire: Sagem Défense Sécurité, 75015 Paris (FR)
(72) Inventeur: JAMES, Michel, F-92140 CLAMART (FR); JEANROY, Alain, F-78700 CONFLANS SAINTE-HONORINE (FR)
(74) Mandataire: Fruchard, Guy
(86) Numéro de dépôt international: PCT/FR2004/001641
(87) Numéro de publication internationale: WO 2005/015128

(56) Documents cités:
- EP-A- 0 141 621
- FR-A- 2 063 128
- FR-A- 2 792 722
- FR-A- 2 805 039

## Description

La présente invention concerne un résonateur notamment pour une mise en oeuvre en gyroscope.

### ARRIERE-PLAN DE L'INVENTION

Un gyroscope résonant hémisphérique comporte habituellement, voir par exemple les documents EP-A-141 621 et FR-A-2 805 039, un résonateur hémisphérique en silice comportant une coque ayant un pôle fixé à une tige support, la coque comprenant un bord annulaire délimité par une surface interne hémisphérique et une surface externe hémisphérique concentriques de sorte que la coque présente une épaisseur constante depuis le pôle jusqu'au bord annulaire. Les modèles de réalisation de ces surfaces sont bien connus et il est donc possible de les usiner avec une grande précision. Toutefois, une coque d'épaisseur constante présente l'inconvénient d'avoir une masse modale, c'est à dire une masse effective, inférieure à 20% de la masse totale de la coque. Cela ne permet donc pas de profiter pleinement de l'amortissement très faible de la silice. Une élévation de la masse modale a pour avantage de diminuer les effets des amortissements parasites, notamment les amortissements résultant de la métallisation ; de diminuer l'effet relatif des défauts géométriques d'usinage ; et d'augmenter la quantité de mouvement de la vibration.

Il a été envisagé pour cela d'augmenter l'épaisseur de la coque tout en maintenant celle-ci constante. Toutefois une augmentation homogène de l'épaisseur de la coque provoque une augmentation de la fréquence de résonance dans les mêmes proportions que l'augmentation de la masse modale de sorte que les performances globales ne sont pas satisfaisantes.

Par ailleurs, pour des raisons indépendantes de l'augmentation de la masse modale, il a été proposé dans le document FR-A-2 792 722, d'augmenter l'épaisseur de la coque à proximité du bord annulaire. Il s'avère que cette disposition permet d'augmenter la masse modale tout en réalisant une faible augmentation de la fréquence de résonance du résonateur. Cependant, dans le document précité, l'augmentation de l'épaisseur de la coque le long du bord est obtenue en modifiant la forme des surfaces internes et/ou externe délimitant la coque, ce qui rend l'usinage de la coque plus complexe et augmente le risque de défaut d'usinage.

A l'inverse, il a été envisagé de diminuer l'épaisseur de la coque au voisinage du bord comme dans le document FR-A-2 063 128.

### OBJET DE L'INVENTION

Un but de l'invention est de proposer un résonateur ayant une masse modale plus élevée que les résonateurs conventionnels tout en conservant une fréquence de fonctionnement relativement faible et une grande facilité d'usinage.

### BREVE DESCRIPTION DE L'INVENTION

En vue de la réalisation de ce but on propose selon l'invention un résonateur comportant une coque ayant un pôle fixé à une tige support, la coque comprenant un bord annulaire délimité par une surface interne et une surface externe homothétiques l'une de l'autre et s'étendant autour d'un même axe de révolution, dans lequel la surface interne et la surface externe sont décalées l'une par rapport à l'autre sur l'axe de révolution de façon que le long du bord annulaire la coque présente une épaisseur supérieure à une épaisseur au pôle. Ainsi, la différence d'épaisseur entre le bord de la coque et le pôle étant obtenue par un simple décalage des surfaces, les modèles d'usinage sont conservés et il est donc possible de réaliser la coque sans difficulté d'usinage particulière.

Selon une version avantageuse de l'invention, la surface interne et la surface externe sont en forme de calotte sphérique. La différence d'épaisseur entre le bord et le pôle est ainsi obtenue par un simple décalage des centres des calottes sphériques sur l'axe de révolution.

### BREVE DESCRIPTION DES DESSINS

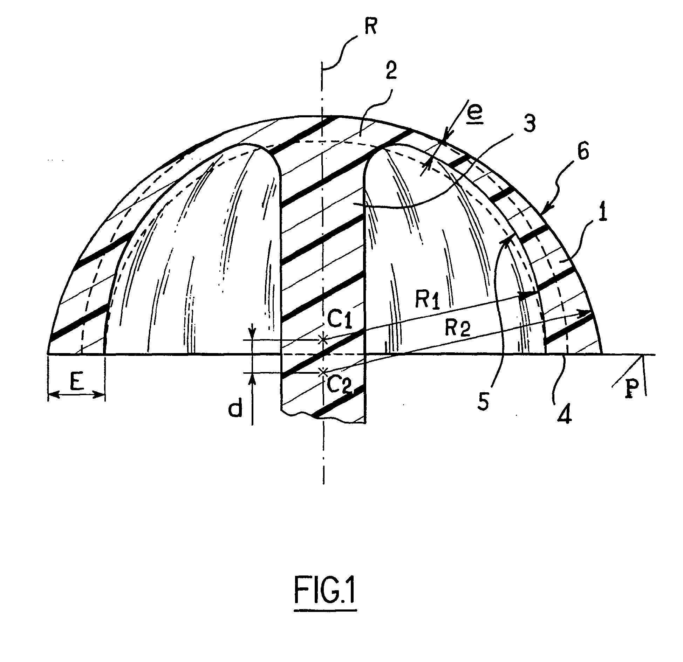

D'autres caractéristiques et avantages de l'invention apparaîtront à la lecture de la description qui suit d'un mode de réalisation particulier non limitatif de l'invention en référence à la figure unique ci-jointe qui est une vue du résonateur selon l'invention en coupe selon un plan axial vertical.

### DESCRIPTION DETAILLEE DE L'INVENTION

En référence à la figure qui est très fortement agrandie pour mieux illustrer l'invention, le résonateur comporte de façon connue en soi une coque 1 qui dans l'exemple illustré est une coque sensiblement hémisphérique ayant un pôle 2 fixé à une tige support 3. La coque 1 comporte un bord annulaire 4, délimité par un plan P coupant une surface interne 5 et une surface externe 6 perpendiculairement à un axe de révolution R.

Les traits tiretés illustrent la forme de la coque obtenue lorsque la surface interne 5 et la surface externe 6 sont deux surfaces hémisphériques toutes les deux centrées au point d'intersection de l'axe de révolution R, et du plan P contenant le bord de la coque. La coque présente alors une épaisseur constante et la masse modale est donc faible comme indiqué ci-dessus.

Selon le mode de réalisation illustré de l'invention, la surface interne 5 est en forme de calotte sphérique dont le centre C1 est décalé vers l'intérieur de la coque par rapport au plan P contenant le bord de la coque. Par ailleurs, la surface externe 6 est également en forme de calotte sphérique dont le centre C2 est décalé vers l'extérieur de la coque par rapport au plan P. Du fait de ces décalages, on constate que l'épaisseur e de la coque au voisinage du pôle est inférieure à l'épaisseur habituelle de la coque tandis que l'épaisseur E le long du bord 4 de la coque est supérieure à l'épaisseur habituelle de la coque. En faisant varier la distance d entre les centres C1 et C2 et les rayons respectifs R1 et R2 de la surface interne 5 et de la surface externe 6, on obtient la variation souhaitée de l'épaisseur de la coque. A titre d'exemple, pour un résonateur ayant un diamètre de 20 mm et une épaisseur de 0,7 mm, il est possible de réaliser une coque conservant une épaisseur de 0,7 mm au voisinage du pôle et ayant le long du bord une épaisseur double de l'épaisseur au voisinage du pôle ce qui a pour effet de doubler la masse modale tout en réalisant une augmentation de seulement 30% de la fréquence de résonance du résonateur. Du fait de l'augmentation de l'épaisseur de la coque le long du bord 4 il est en outre possible de diminuer l'épaisseur de la couche de métallisation (non représentée sur la figure) qui est appliquée sur la coque, ce qui diminue l'amortissement apporté par la métallisation tout en conservant la même résistance électrique de la métallisation. En outre l'influence relative des défauts d'usinage est divisée par deux de sorte que le fonctionnement du résonateur se trouve amélioré.

Bien entendu l'invention n'est pas limitée au mode de réalisation illustré et on peut y apporter des variantes de réalisation sans sortir du cadre de l'invention tel que définie par les revendications. En particulier, bien que le résonateur selon l'invention ait été illustré avec une surface interne et une surface externe sphériques, on peut réaliser le résonateur avec d'autres surfaces de révolution notamment des surfaces paraboliques ou elliptiques bien que la surface sphérique présente une facilité d'usinage plus grande.

Bien que l'invention ait été illustrée avec une surface interne dont le centre C1 est décalé vers l'intérieur de la calotte et une surface externe dont le centre C2 est décalé vers l'extérieur de la calotte, on peut réaliser le résonateur selon l'invention en faisant des décalages différents. La structure permettant d'obtenir la masse modale maximale pour une masse donnée de la coque consisterait à réaliser la surface externe 6 sous forme d'une demi-sphère dont le centre C2 est placé dans le plan P et à décaler le centre C1 de la surface interne 5 de la distance d vers l'intérieur. Dans ce cas, la surface interne 5 est supérieure à une demi-sphère de sorte que la zone de bord de la surface interne 5 est, légèrement rentrante. Elle peut également être rendue cylindrique sur une hauteur d par un usinage approprié. En pratique, le compromis optimum est obtenu avec des calottes sphériques voisines d'une demi-sphère, les centres de la surface interne et de la surface externe étant disposés de part et d'autre du plan P contenant le bord annulaire 4, comme illustré sur la figure.

## Revendications

1. Résonateur comportant une coque (1) ayant un pôle (2) fixé à une tige support (3), la coque (1) comportant un bord annulaire (4) délimité par une surface interne (5) et une surface externe (6) s'étendent autour d'un même axe de révolution (R), la coque présentant le long du bord annulaire une épaisseur (E) supérieure à une épaisseur (e) au voisinage du pôle, **caractérisé en ce que** la surface interne (5) et la surface externe (6) sont homothétiques l'une de l'autre et décalées l'une par rapport à l'autre sur l'axe de révolution de façon que la coque soit plus épaisse le long du bord annulaire (4).

2. Résonateur selon la revendication 1 **caractérisé en ce que** la surface interne (5) et la surface externe (6) sont en forme de calotte sphérique.

3. Résonateur selon la revendication 2 **caractérisé en ce que** les calottes sphériques sont voisines d'une demi-sphère.

4. Résonateur selon la revendication 3 **caractérisé en ce que** les centres (C1, C2) de la surface interne et de la surface externe s'étendent de part et d'autre d'un plan (P) contenant le bord annulaire (4).

## Claims

1. A resonator comprising a shell (1) a having a pole (2) held by a support rod (3), the shell (1) having an annular edge (4) defined by an inside surface (5) and an outside surface (6) that extend around a common axis of revolution (R), the shell presenting thickness (E) along the annular edge (4) that is greater than the thickness (e) that it presents in the vicinity of the pole, the resonator being **characterized in that** the inside surface (5) and the outside surface (6) are geometrically similar and are offset relative to each other along the axis of revolution in such a manner that the shell is thickest along the annular edge (4).

2. A resonator according to claim 1, **characterized in that** the inside surface (5) and the outside surface (6) are in the form of spherical caps.

3. A resonator according to claim 2, **characterized in that** the spherical caps are close to being hemispheres.

4. A resonator according to claim 3, **characterized in that** the centers (C1, C2) of the inside surface and of the outside surface extend on either side of a plane (P) containing the annular edge (4).

## Patentansprüche

1. Resonator, umfassend eine Schale (1), die einen Pol (2) hat, der an einer Stützstange (3) befestigt ist, wobei die Schale (1) einen ringförmigen Rand (4) hat, der von einer inneren Oberfläche (5) und einer äußeren Oberfläche (6), die sich um ein und dieselbe Drehachse (R) erstrecken, begrenzt ist, wobei die Schale entlang des ringförmigen Randes eine Dicke (E) aufweist, die größer als eine Dicke (e) nahe des Pols ist, **dadurch gekennzeichnet, dass** die innere Oberfläche (5) und die äußere Oberfläche (6) zueinander homothetisch und auf der Drehachse derart zueinander versetzt sind, dass die Schale entlang des ringförmigen Randes (4) dicker ist.

2. Resonator nach Anspruch 1, **dadurch gekennzeichnet, dass** die innere Oberfläche (5) und die äußere Oberfläche (6) die Form einer Kugelkalotte haben.

3. Resonator nach Anspruch 2, **dadurch gekennzeichnet, dass** die Kugelkalotten annähernd halbkugelförmig sind.

4. Resonator nach Anspruch 3, **dadurch gekennzeichnet, dass** sich die Mittelpunkte (C1, C2) der inneren Oberfläche und der äußeren Oberfläche zu beiden Seiten einer Ebene (P) erstrecken, die den ringförmigen Rand (4) enthält.
